# EUROPEAN PATENT SPECIFICATION

(11) **EP 0 650 106 B1**
(45) Date of publication and mention of the grant of the patent: **11.02.1998**
(21) Application number: 94115995.6
(22) Date of filing: 11.10.1994
(51) Int. Cl.: G04G 7/00

(54) **Method and apparatus for synchronising clocks being connected to a network system**
Verfahren und Vorrichtung zur Synchronisation von an einem Netzwerk angeschlossenen Uhren
Procédé et dispositif pour synchroniser des horloges connectées à un réseau

(30) Priority: 21.10.1993 EP 93402586
(43) Date of publication of application: 26.04.1995
(73) Proprietor: THOMSON Multimedia, 92648 Boulogne Cédex (FR)
(72) Inventor: Bürklin, Helmut, F-67000 Strasbourg (FR)
(74) Representative: Wördemann, Hermes, Dipl.-Ing.

(56) References cited:
- EP-A- 0 548 381
- GB-A- 2 022 881

## Description

The present invention relates to a method and to an apparatus for synchronising clocks being connected to a network system.

### Background

Many devices (in particular white goods or brown goods) in a household may contain a clock. Some systems allow to connect all these devices and the related clocks to a common bus or network. The commands for controlling the clocks are in general limited to reading or writing a given time or to broadcasting the time of a given clock to one dedicated device or to the entire system or to a part of the system. An example home bus system is described in Esprit Home Systems Specification 1.1, ESPRIT project 6782. In such known systems it is not specified in which manner a clock should react if it receives the time broadcast by another clock. So, it is possible to initialise all clocks to a given time (e.g. by a user action, which creates a 'write time' broadcast to the entire system), but due to tolerances in the different clocks, so achieved synchronisation will not be maintained. Regular broadcasting by a special device 'master clock' has the disadvantage of introducing one device with different capabilities. In case there are several master clocks, conflicts may occur and the advantages of a high precision clock will fade away if a lower precision master clock overrides it.

From EP-A-0 548 381 a method for synchronising clocks in hierarchically subdivided computer networks is known. There is one high precision clock provided in a computer which is positioned at the highest hierarchical level. This clock is the master clock of the system and synchronises all clocks at the next lower hierarchical level by sending timestamps. The clocks at the second lower hierarchical level are synchronised by timestamps which are broadcast by a sub-master clock of the next higher level. Therefore, not all clocks in the system are synchronised by identical time stamp messages.

In GB-A-2 022 881 a programmed digital secondary clock is disclosed, which is arranged to function as a master clock, a sub-master clock or a slave clock. It is revealed, that the programmed digital secondary clock will be used in a system where identical units are connected in daisy chain to provide a continuously updated real time count at remote locations such as in an airport, hospital, school, etc.. Each unit sends its updated real time count in serial data format to the next unit of the daisy chain. Each unit acting as a slave clock checks whether there is a malfunction at the previous master clock and starts operating as a master clock when a malfunction is detected.

### Invention

It is one object of the invention to guarantee initial synchronisation and keeping of synchronisation between real time clocks in a bus connecting distributed devices. This object is reached by the methods disclosed in claims 1 and 3.

It is a further object of the invention to disclose an apparatus which utilises the inventive method. This object is reached by the apparatus disclosed in claims 11 and 12.

A good synchronising system should care about the precision of different clock types:
- non initialised
- display only, no timer included
- battery driven low precision
- 50Hz driven
- quartz driven
- official time distributed via radio (for a specific time zone)
- user intervention
This list can be interpreted as a list of priorities, user intervention having the highest. Higher priority clocks should set the time of lower priority clocks (in case there are tuners in the system which receive the time from different time zones, it is supposed that only the time of one time zone will be transmitted to the rest of the system).

The first proposal for solving the problem is as follows:
- every clock broadcasts (datagram distribution) its time periodically
- the broadcast period is dependent on the precision (higher precision leads to a shorter period)
- every clock which receives a broadcast updates its time
- every clock which receives a broadcast resets its counter of the broadcast period
- user intervention initiates an immediate broadcast
In this manner only the clock with the highest precision broadcasts its time to the system, but whenever it fails the next lower precision clock takes over the broadcasting automatically. The broadcast periods are defined as factorial periods of a preselected time period, e.g. a minute (e.g. 5, 6, 12, 15, 20, 30, 60 seconds), and are synchronised to the preselected time unit.

Then, all clocks displaying hours (hh) and minutes (mm) only will receive their time with no extra cost.

Another proposal is, that all devices will broadcast the time with an equal period (say one minute), but with a different phase (in seconds, e.g. highest precision clock at hh:mm:50, next lower precision clock at hh:mm:52, etc.; or highest precision clock at hh:mm:00, next lower precision clock at hh:mm:02, etc.), but only if no broadcast was received in the preceding time period. In the latter case, traffic on the network is independent of the precision of the different clocks. The displays are either slightly out of time or will need internal second counting capability.

In both proposals, time broadcasting may be done to the entire system or to a group, or subgroup, of clocks only.

A disadvantage of the both above described kinds of synchronising is that the risk of collisions between two devices of equal precision is enhanced (causing higher traffic on the network), at least on media without collision avoidance (e.g. current carrier transmission on power lines), or if repetition is handled in the lower protocol layers only.

According to the invention, there are two proposals:

### Phase of transmission depends on precision

- every clock receiving a time broadcast of the same or higher precision class does not broadcast for a certain amount of time (e.g. N minutes). The precision class of the broadcaster can be easily derived from the phase of the time broadcast (e.g. seconds count).
- this amount of time (e.g. N minutes) is a random or pseudo-random value, depending on some internal state of the instance of this device (and not only on the present time). Two possibilities: these values may be changed periodically or after each transmission.

### Frequency of transmission depends on precision

- every clock receiving a time broadcast of any precision class does not broadcast for a certain amount of time (e.g. N minutes).
- this amount of time (e.g. N minutes) is a random or pseudo-random value, it depends a.o. on the precision of this clock, so that higher precision clocks will wait (in average) for a shorter time.

In principle, the inventive method is suited for synchronising clocks being connected to a network system, whereby:
- said clocks may belong to different precision classes;
- the time of every clock is broadcast within said network system after expiry of a pre-selected time period, whereby a higher of said precision classes is associated with a shorter time period and time period counting means are related to each of said clocks;
- every clock which receives said broadcast updates its time and the related time period counting means are reset,
or whereby:
- said clocks may belong to different precision classes;
- the time of every clock is broadcast within said network system having a pre-selected phase, which is related to said precision class in such a way that the broadcast time related to a higher of said precision classes is earlier, and having a pre-selected broadcast time period, which is independent of said precision class;
- the time of a specific clock is broadcast only, when the clock has received no related time from a clock belonging to a higher precision class;
- every clock which receives said broadcast updates its time.

Advantageous additional embodiments of the inventive method are resulting from the respective dependent claims.

In principle the inventive apparatus for synchronising clocks being connected to a network system is related to a method according to any of claims 1 to 10 and includes:
- a clock which may belong to different precision classes;
- bus interface means which broadcast the time of said clock within said network system after expiry of a pre-selected time period, which is related to said precision class in such a way that a higher of said precision classes is associated with a shorter time period, whereby time period counting means are related to said clock;
- interrupt means which interrupt time transmission from said clock to said bus interface means during a certain time period after each reception of time information by said bus interface means, whereby the time of said clock is broadcast only, when the bus interface means have received no related time from a clock belonging to a higher precision class and whereby the time of said clock is updated when receiving said broadcast time information and said time period counting means are reset,
or includes:
- a clock which may belong to different precision classes;
- bus interface means which broadcast the time of said clock within said network system having a pre-selected phase, which is related to said precision class in such a way that the broadcast time related to a higher of said precision classes is earlier, and having a pre-selected broadcast time period, which is independent of said precision class;
- interrupt means which interrupt time transmission from said clock to said bus interface means during a certain time period after each reception of time information by said bus interface means, whereby the time of said clock is broadcast only, when the bus interface means have received no related time from a clock belonging to a higher precision class and whereby the time of said clock is updated when receiving said broadcast time information.

Advantageous additional embodiments of the inventive apparatus are resulting from the respective dependent claim.

### Drawing

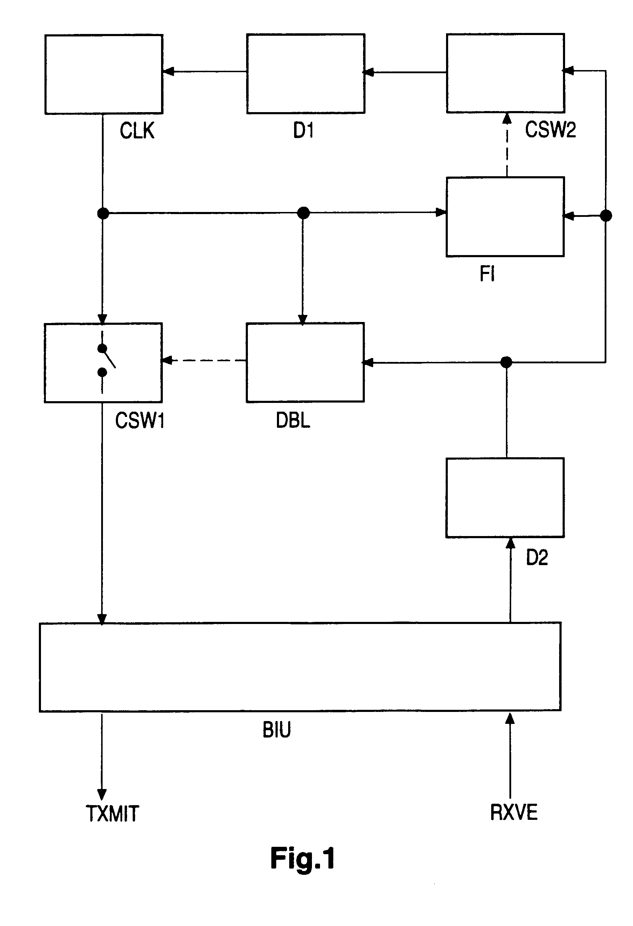

Preferred embodiments of the invention are described with reference to the accompanying drawing, which shows in:
Fig. 1 .

### Preferred embodiments

In a real system there is some delay in datagram distribution (routers, time for medium access). This delay may vary considerably over the time. For this reason every clock should reset its internal time only in case of major and/or repeated differences to the time received. But this can be left to the designer of the clock - nevertheless the choice should be made keeping in mind the time difference between broadcasts of different precision classes, so that it is guaranteed that every clock will be overwritten, at least on the long term, by broadcasts of higher precision classes.
The distribution of time in the described manner is not limited to the time of day. E.g. the date may be distributed with the time in every time period, or could be distributed only on longer periods, but only by the device which succeeded to distribute its time.

A internal clock CLK continuously distributes the local time inside a device (coffee machine, cooker, dish washer, washing machine, heating system, air conditioner, FM receiver, TV set, VCR). A bus interface unit BIU receives time information RXVE from a bus. Time information TXMIT is sent to the bus only when the controlled switch CSW1 is closed. This switch is controlled by a delaying block DBL which interrupts time transmission during a certain time period after each reception of time information (and possibly allows transmission only at fixed intervals corresponding to the internal time).
Incoming time information RXVE is allowed to set the internal clock CLK only when a second controlled switch CSW2 is closed. This switch may be closed continuously in a simple embodiment, or can be controlled by a digital filter circuit FI which compares the internal (output of CLK) and the received time and allows updating only when a significant difference over a certain period is detected.
Supplementary blocks D1, D2 compensating the delay of time distribution within the network may be included.

Advantageously, in a bus system with more than one real time clock initial synchronisation will be achieved without user intervention (if at least one of the clocks is initialised). Synchronisation will be kept, while highest precision clocks take priority over lower precision ones. Even if the controlling clock fails, the next lower priority clock will automatically take over the task of controlling the system. Updating is still possible by manual intervention from any point of the system. Bus traffic is kept low.

## Claims

1. Method for synchronising clocks (CLK) being connected to a network system, characterised by the steps of:
choosing said clocks to belong to different precision classes;
broadcasting the time of every clock (TXMIT) within said network system after expiry of a pre-selected time period, whereby a higher of said precision classes is associated with a shorter time period and time period counting means are related to each of said clocks, whereby within these steps every clock which receives said broadcast (RXCE) updates its time and the related time period counting means are reset.

2. Method according to claim 1, **characterised in** that every clock (CLK) receiving a time broadcast of any precision class does not broadcast its time within a further time period which is higher than said pre-selected time period.

3. Method for synchronising clocks (CLK) being connected to a network system, characterised by the steps of:
choosing said clocks to belong to different precision classes;
broadcasting the time of every clock (TXMIT) within said network system having a pre-selected phase, which is related to said precision class in such a way that the broadcast time related to a higher of said precision classes is earlier, and having a pre-selected broadcast time period, which is independent of said precision class;
broadcasting the time of a specific clock only, when the clock has received no related time from a clock belonging to a higher precision class;
whereby within these steps every clock which receives said broadcast (RXVE) updates its time.

4. Method according to claim 3, **characterised in** that every clock (CLK) receiving a time broadcast of the same or higher precision class does not broadcast its time within a further time period which is higher than said pre-selected time period.

5. Method according to any of claims 1 to 4, **characterised in** that said further time period is a random or pseudo-random value, depending on some internal state of a device to which the clock (CLK) belongs and depending not only on the present time, whereby these values are changed periodically or after each time broadcast.

6. Method according to any of claims 1 to 5, **characterised in** that said time is broadcast (TXMIT) only to a part of the clocks belonging to said network system.

7. Method according to any of claims 1 to 6, **characterised in** that said pre-selected time period is a factorial period of a minute.

8. Method according to any of claims 1 to 7, **characterised in** that in case tuners related to said clocks (CLK) receive the time of different time zones, one of said zone times is selected for broadcasting within said network system.

9. Method according to any of claims 1 to 8, **characterised in** that when evaluating the internal time of a clock (CLK) and the time broadcast within said network system the delay of time distribution within said network system is compensated using appropriate delay means (D1, D2).

10. Method according to any of claims 1 to 9, **characterised in** that digital filter means (FI) compare the internal time of a clock (CLK) and the time (RXVE) broadcast within said network system and allow (CSW2) updating only when a difference exceeding a pre-selected threshold over a pre-selected observation period is detected.

11. Apparatus for synchronising clocks being connected to a network system, according to the method of any of claims 1,2 and 5 to 10 and including:
a clock (CLK) which belongs to one precision class out of a plurality of different precision classes;
bus interface means (BUI) which are capable to broadcast (TXMIT) the time of said clock within said network system after expiry of a pre-selected time period, which is related to said one precision classe in such a way that a higher of said precision classes is associated with a shorter time period, whereby time period counting means are related to said clock;
interrupt means (DBL, CSW1) which are capable to interrupt time transmission from said clock to said bus interface means during a certain time period after each reception of time information (RXVE) by said bus interface means, whereby the time of said clock is broadcast only, when the bus interface means have received no related time from a clock belonging to a higher precision class and whereby the time of said clock is updated when receiving said broadcast time information (RXVE) and said time period counting means are reset.

12. Apparatus for synchronising clocks being connected to a network system, according to the method of any of claims 3 to 10 and including:
a clock (CLK) which belongs to one precision class out of a plurality of different precision classes;
bus interface means (BUI) which are capable to broadcast (TXMIT) the time of said clock within said network system having a pre-selected phase, which is related to said one precision class in such a way that the broadcast time related to a higher of said precision classes is earlier, and having a pre-selected broadcast time period, which is independent of said precision class;
interrupt means (DBL, CSW1) which are capable to interrupt time transmission from said clock to said bus interface means during a certain time period after each reception of time information (RXVE) by said bus interface means, whereby the time of said clock is broadcast only, when the bus interface means have received no related time from a clock belonging to a higher precision class and whereby the time of said clock is updated when receiving said broadcast time information (RXVE).

13. Apparatus according to claim 11 or 12, **characterised in** that digital filter means (FI) compare the internal time of said clock (CLK) and the time (RXVE) broadcast within said network system and allow updating of the clock time only when a difference exceeding a pre-selected threshold over a pre-selected observation period is detected.

## Patentansprüche

1. Verfahren zur Synchronisation von an einem Netzwerk angeschlossenen Uhren (CLK), gekennzeichnet durch die folgenden Schritte:
Auswahl der Uhren so, daß sie zu verschiedenen Genauigkeitsklassen gehören;
Senden der Zeit jeder Uhr (TXMIT) in dem Netzwerk nach Ablauf einer vorgewählten Zeitdauer, wobei eine höhere der Genauigkeitsklassen einer kürzeren Zeitdauer zugeordnet ist und die Zählmittel für die Zeitdauer mit jeder der Uhren in Beziehung stehen, wobei in diesen Schritten jede die Sendung (RXCE) empfangende Uhr ihre Zeit aktualisiert und die in Beziehung stehenden Zählmittel für die Zeitdauer rückgesetzt werden.

2. Verfahren nach Anspruch 1,
dadurch gekennzeichnet, daß jede eine Zeitsendung einer Genauigkeitsklasse empfangende Uhr (CLK) ihre Zeit innerhalb einer weiteren Zeitdauer nicht sendet, die länger ist als die vorgewählte Zeitdauer.

3. Verfahren zur Synchronisation von an einem Netzwerk angeschlossenen Uhren (CLK), gekennzeichnet durch folgende Schritte:
Auswahl der Uhren derart, daß sie zu verschiedenen Genauigkeitsklassen gehören;
Senden der Zeit jeder Uhr (TXMIT) in dem Netzwerk mit einer vorgewählten Phase, die derart mit der Genauigkeitsklasse in Beziehung steht, daß die einer höheren der Genauigkeitsklassen zugeordnete Sendezeit früher liegt, sowie mit einer vorgewählten Sendezeitdauer, die von der Genauigkeitsklasse unabhängig ist;
Senden der Zeit einer bestimmten Uhr nur dann, wenn die Uhr keine zugehörige Zeit von einer zu einer höheren Genauigkeitsklasse gehörenden Uhr empfangen hat;
wobei in diesen Schritten jede Uhr, die die Sendung (RXVE) empfängt, ihre Zeit aktualisiert.

4. Verfahren nach Anspruch 3,
dadurch gekennzeichnet, daß jede Uhr (CLK), die eine Zeitsendung derselben oder einer höheren Genauigkeitsklasse empfängt, ihre Zeit innerhalb einer weiteren Zeitdauer, die länger ist als der vorgewählte Zeitraum, ihre Zeit nicht sendet.

5. Verfahren nach einem der Ansprüche 1 bis 4,
dadurch gekennzeichnet, daß die weitere Zeitdauer ein Zufalls- oder Pseudo-Zufallswert ist, abhängig von dem internen Zustand eines Gerätes, zu der die Uhr (CLK) gehört, und abhängig nicht nur von der jeweiligen Zeit, wobei diese Werte periodisch oder nach jeder Zeitsendung geändert werden.

6. Verfahren nach einem der Ansprüche 1 bis 5,
dadurch gekennzeichnet, daß die Zeit nur an einen Teil der zu dem Netzwerk gehörenden Uhren gesendet wird (TXMIT).

7. Verfahren nach einem der Ansprüche 1 bis 6,
dadurch gekennzeichnet, daß die vorgewählte Zeitdauer eine faktorielle Dauer einer Minute ist.

8. Verfahren nach einem der Ansprüche 1 bis 7,
dadurch gekennzeichnet, daß in dem Fall, daß den Uhren (CLK) zugeordnete Tuner die Zeit von verschiedenen Zeitzonen empfangen, eine dieser Zeitzonen für die Sendung in dem Netzwerk ausgewählt wird.

9. Verfahren nach einem der Ansprüche 1 bis 8,
dadurch gekennzeichnet, daß dann, wenn die interne Zeit einer Uhr (CLK) und die Zeitsendung in dem Netzwerk ausgewertet werden, die Verzögerung in der Zeitverteilung in dem Netzwerk durch Anwendung geeigneter Verzögerungsmittel (D1, D2) kompensiert wird.

10. Verfahren nach einem der Ansprüche 1 bis 9,
dadurch gekennzeichnet, daß digitale Filtermittel (Fl) die interne Zeit einer Uhr (CLK) und die in dem Netzwerk gesendete Zeit (RXVE) vergleichen und eine Aktualisierung nur dann ermöglichen (CSW2), wenn eine einen vorgewählten Schwellwert über eine vorgewählte Beobachtungsdauer übersteigende Differenz festgestellt wird.

11. Vorrichtung zur Synchronisation von an einem Netzwerk angeschlossenen Uhren gemäß den Verfahren nach einem der Ansprüche 1, 2 und 5 bis 10, enthaltend:
eine Uhr (CLK), die zu einer Genauigkeitsklasse aus einer Vielzahl von verschiedenen Genauigkeitsklassen gehört;
Bus-Schnittstellenmittel (BIU), die in der Lage sind, die Zeit der Uhr in dem Netzwerk nach Ablauf einer vorgewählten Zeitdauer zu senden (TXMIT), die mit der einen Genauigkeitsklasse derart in Beziehung steht, daß eine höhere der Genauigkeitsklassen einer kürzeren Zeitdauer zugeordnet ist, wobei Zählmittel für die Zeitdauer der Uhr zugeordnet sind;
Unterbrechungsmittel (DBL, CSW1), die in der Lage sind, die Zeitübertragung von der Uhr zu den Bus-Schnittstellenmitteln während einer bestimmten Zeitdauer nach jedem Empfang der Zeitinformation (RXVE) durch die Bus-Schnittstellenmittel zu unterbrechen, wobei die Zeit der Uhr nur dann gesendet wird, wenn die Bus-Schnittstellenmittel keine zugehörige Zeit von einer zu einer höheren Genauigkeitsklasse gehörenden Uhr empfangen haben, und wobei die Zeit dieser Uhr aktualisiert wird, wenn die Information (RXVE) über die Sendezeit empfangen wird und die Zählmittel für die Zeitdauer zurückgesetzt sind.

12. Vorrichtung zur Synchronisation von an einem Netzwerk angeschlossenen Uhren nach dem Verfahren eines der Ansprüche 3 bis 10, enthaltend:
eine Uhr (CLK), die zu einer Genauigkeitsklasse aus einer Vielzahl von unterschiedlichen Genauigkeitsklassen gehört;
Bus-Schnittstellenmittel (BIU), die in der Lage sind, die Zeit der Uhr in dem Netzwerk mit einer vorgewählten Phase zu senden, die derart mit der einen Genauigkeitsklasse in Beziehung steht, daß die einer höheren der Genauigkeitsklassen zugeordnete Sendezeit früher liegt, und die eine vorgewählte Sendezeitdauer aufweisen, die unabhängig ist von der Genauigkeitsklasse;
Unterbrechungsmittel (DBL, CSW1), die in der Lage sind, die Zeitübertragung von der Uhr zu den Bus-Schnittstellenmitteln während einer bestimmten Zeitdauer nach jedem Empfang der Zeitinformation (RXVE) durch die Bus-Schnittstellenmittel zu unterbrechen, wobei die Zeit der Uhr nur dann gesendet wird, wenn die Bus-Schnittstellenmittel keine zugehörige Zeit von einer zu einer höheren Genauigkeitsklasse gehörenden Uhr empfangen haben, und wobei die Zeit der Uhr aktualisiert wird, wenn die Information (RXVE) über die Sendezeit empfangen wird.

13. Vorrichtung nach Anspruch 11 oder 12,
dadurch gekennzeichnet, daß digitale Filtermittel (Fl) die interne Zeit der Uhr (CLK) und die in dem Netzwerk gesendete Zeit (RXVE) miteinander vergleichen und eine Aktualisierung der Uhr nur dann ermöglichen, wenn eine einen vorgewählten Schwellwert über eine vorgewählte Beobachtungszeit übersteigende Differenz festgestellt wird.

## Revendications

1. Procédé de synchronisation des horloges (CLK) connectées à un réseau, caractérisé par les étapes suivantes :
- Sélection desdites horloges appartenant à des niveaux de précision différents,
- Diffusion du signal horaire de chaque horloge (TXMIT) dans ledit réseau après expiration d'un intervalle de temps présélectionné où un niveau de précision plus élevé desdits niveaux de précision est associé avec un intervalle de temps plus court et les dispositifs de décompte des intervalles de temps sont associés à chacune des horloges, où durant ces étapes chaque horloge recevant ladite émission (RXCE) met son heure à jour et les dispositifs de décompte des intervalles de temps sont réinitialisés.

2. Procédé selon la revendication 1, **caractérisé en ce que** chaque horloge (CLK) recevant une émission de signal horaire d'un niveau de précision quelconque ne diffuse pas son signal horaire pendant un intervalle de temps supplémentaire supérieure au dit intervalle de temps présélectionné.

3. Procédé de synchronisation des horloges (CLK) connectées à un réseau, caractérisé par les étapes suivantes :
- Sélection desdites horloges appartenant à différents niveaux de précision
- Diffusion du signal horaire de chaque horloge (TXMIT) dans ledit réseau avec une phase présélectionnée liée au niveau de précision de telle sorte que l'émission du signal horaire associée au niveau de précision le plus élevé intervient plus tôt et avec un intervalle de temps d'émission du signal horaire indépendant dudit niveau de précision
- Diffusion du signal horaire d'une horloge spécifique uniquement lorsque l'horloge n'a reçu aucun signal horaire d'une horloge appartenant à un niveau de précision plus élevé, où durant ces étapes chaque horloge recevant ladite émission (RXCE) met son heure à jour.

4. Procédé selon la revendication 3, **caractérisé en ce que** chaque horloge (CLK) recevant une émission de signal horaire d'un niveau de précision égal ou supérieur ne diffuse pas son signal horaire pendant un intervalle de temps supplémentaire supérieur au dit intervalle de temps présélectionné.

5. Procédé selon l'une des revendications 1 à 4, **caractérisé en ce que** ledit intervalle supplémentaire est une valeur aléatoire ou pseudo-aléatoire liée à l'état interne d'un appareil auquel l'horloge (CLK) appartient et ne dépend pas uniquement de l'heure courante, où ces valeurs sont modifiées périodiquement ou après chaque émission de signal horaire.

6. Procédé selon l'une des revendications 1 à 5, **caractérisé en ce que** ledit signal horaire (TXMIT) est transmis uniquement à une partie des horloges dudit réseau.

7. Procédé selon l'une des revendications 1 à 6, **caractérisé en ce que** ledit intervalle de temps présélectionné est une période factorielle d'une minute.

8. Procédé selon l'une des revendications 1 à 7, **caractérisé en ce que** si des syntoniseurs reliés aux horloges (CLK) reçoivent le signal horaire de différents fuseaux, un de ces fuseaux horaires est sélectionné pour diffuser sur ledit réseau.

9. Procédé selon l'une des revendications 1 à 8, **caractérisé en ce que** lors de l'évaluation de l'heure interne d'une horloge (CLK) et de l'émission du signal horaire sur le réseau, le retard de diffusion du signal horaire dans le réseau est compensé par l'utilisation de moyens appropriés de temporisation (D1, D2).

10. Procédé selon l'une des revendications 1 à 9, **caractérisé en ce que** des moyens de filtrage numérique (FI) comparent l'heure interne d'une horloge (CLK) et l'émission du signal horaire (RXVE) sur le réseau et ne permettent (CSW2) la mise à jour que lorsqu'un écart supérieur à un seuil donné est constaté pendant une période d'observation présélectionnée.

11. Appareil de synchronisation d'horloges connectées à un réseau selon un procédé conforme à l'une ou à plusieurs des revendications 1, 2 et 5 à 10 et incluant :
- une horloge (CLK) appartenant à un niveau de précision choisi parmi plusieurs niveaux de précision différents,
- des bus d'interface (BIU) capables d'émettre (TXMIT) le signal horaire de l'horloge dans le réseau après expiration d'un intervalle de temps présélectionné lié au dit niveau de précision de telle sorte qu'un niveau de précision plus élevé est associé à un intervalle de temps plus court et où les dispositifs de décompte des intervalles de temps sont associés à ladite horloge,
- des moyens d'interruption (DBL, CSW1) capables d'interrompre la transmission du signal horaire entre l'horloge et les bus d'interface pendant un certain intervalle de temps après chaque réception de signal horaire (RXVE) par lesdits bus d'interface, où le signal horaire de l'horloge n'est transmis que lorsque les bus d'interface n'ont reçu aucun signal horaire d'une horloge appartenant à un niveau de précision plus élevé, et où le signal horaire de ladite horloge est mis à jour à réception de l'information du signal horaire de l'émission (RXVE) et les dispositifs de décompte des intervalles de temps sont réinitialisés,

12. Appareil de synchronisation d'horloges connectées à un réseau selon un procédé conforme à l'une ou à plusieurs des revendications 3 à 10 et incluant :
- une horloge (CLK) qui appartient à un niveau de précision choisi parmi plusieurs niveaux de précision différents,
- des bus d'interface (BIU) capables d'émettre (TXMIT) le signal horaire de l'horloge dans un réseau, avec une phase présélectionnée liée au niveau de précision de telle sorte que l'émission du signal horaire associée au niveau de précision le plus élevé intervient plus tôt, et avec un intervalle de temps d'émission présélectionné qui est indépendant dudit niveau de précision.
- des moyens d'interruption (DBL, CSW1) capables d'interrompre la transmission du signal horaire entre l'horloge et les bus d'interface pendant un certain intervalle de temps après chaque réception de signal horaire (RXVE), où le signal horaire de l'horloge est émis seulement lorsque les bus d'interface n'ont reçu aucun signal horaire d'une horloge appartenant à un niveau de précision plus élevé, et où le signal horaire de la dite horloge est mis à jour lors de la réception de l'information (RXVE) du signal horaire de l'émission.

13. Appareil selon l'une des revendications 11 ou 12, **caractérisé en ce que** des moyens de filtrage numérique (FI) comparent l'heure interne d'une horloge (CLK) et l'émission du signal horaire (RXVE) sur le réseau et ne permettent la mise à jour du signal horaire de l'horloge que lorsqu'un écart supérieur à un seuil donné est constaté pendant une période d'observation présélectionnée.
